# EUROPÄISCHE PATENTSCHRIFT

(11) **EP 0 824 170 B1**
(45) Veröffentlichungstag und Bekanntmachung des Hinweises auf die Patenterteilung: **05.07.2000**
(21) Anmeldenummer: 97113063.8
(22) Anmeldetag: 30.07.1997
(51) Int. Cl.: E03C 1/02, F16L 3/24

(54) **Befestigungsvorrichtung für einen zur Wandmontage von sanitären Elementen verwendeten Anchlussfitting**
Mounting device for a fitting used for connecting sanitary elements to a wall
Dispositif de raccordement pour un accessoire de fixation utilisé pour attacher un élément sanitaire à une paroi

(30) Priorität: 13.08.1996 DE 29614019 U
(43) Veröffentlichungstag der Anmeldung: 18.02.1998
(73) Patentinhaber: POLYTHERM VERTRIEBSGESELLSCHAFT HAUSTECHNISCHER ARTIKEL mbH, 48607 Ochtrup (DE)
(72) Erfinder: Terhaar, Christian, Dipl.-Ing., 48683 Ottenstein/Ahrhaus (DE)
(74) Vertreter: Hilleringmann, Jochen, Dipl.-Ing.

(56) Entgegenhaltungen:
- EP-A- 0 660 019
- DE-U- 9 301 520
- US-A- 3 747 166
- US-A- 5 050 824

## Beschreibung

Die Erfindung betrifft eine Befestigungsvorrichtung zur Wandmontage von sanitären Elementen mittels eines Anschlußfittings.

Es ist üblich, sanitäre Elemente, wie Rohrleitungen oder Absperrventile, mittels eines Anschlußfittings, der auch Wandscheibe genannt wird, an Wänden zu befestigen. Anschlußfittings bestehen aus einem Rohrstutzen mit Innengewinde, in das z. B. ein Absperrventil oder ein Rohr eingeschraubt werden kann, und aus einem Anschlußstutzen für die Zuleitung. Der Rohrstutzen und der Anschlußstutzen bilden einen Winkel von 90°. Der Anschlußfitting weist einen Flansch auf, der mit Schrauben entweder direkt an die Wand oder an eine bei der Sanitärinstallation übliche Montageschiene geschraubt werden kann. Häufig werden Doppelanschlüsse verwendet, die jeweils einen Anschluß für warmes Wasser und einen für kaltes Wasser aufweisen. Die Zuleitungsrohre werden gemeinsam in einem Schacht verlegt, während die Auslässe, z. B. Wasserhähne, räumlich getrennt angeordnet werden. Dies erfordert, daß die Zuleitungsrohre gebogen werden müssen. Um 90°-Biegungen, die das Rohr stark beanspruchen, zu vermeiden, können die Anschlußfittings verdreht an der Wand befestigt werden. Die Rohre können dann z. B. in einem Winkel von 45° befestigt werden.

In der DE-OS 42 24 483 ist eine Montageschiene zur Installation von Versorgungsleitungen und Sanitärarmaturen beschrieben. Eine Befestigungsplatte ist auf die Montageschiene aufsetzbar, wobei überstehende Ränder der Befestigungsplatte die Montageschiene umgreifen. Die Befestigungsplatte weist eine zentrale achtzackige Ausnehmung auf, in die ein Anschlußwinkel mit einem entsprechenden Zapfen eingreift. Die drei Teile werden mit einer Schraube, die an der dem Anschlußwinkel abgewandten Seite der Montageschiene angesetzt und durch ein Durchgangsloch in den Anschlußwinkel geschraubt wird, befestigt. Nachteilig ist, daß die drei Komponenten erst durch die Schraube miteinander fixiert werden. Bei dem Zusammenbau der Montageschiene müssen daher drei Teile in Position gehalten werden und gleichzeitig die Schraube eingedreht werden. Bei der Befestigung an der Wand ist es von Nachteil, daß der Schraubenkopf über die Montageschiene nach hinten übersteht. Eine direkte Befestigung der Montageschiene an der Wand ist daher nicht möglich. Entweder muß ein Loch für den Schraubenkopf geschaffen werden oder eine aufwendige Tragkonstruktion, die von der Wand beabstandet ist, muß verwendet werden.

Der Erfindung liegt die Aufgabe zugrunde, eine Befestigungsvorrichtung für Anschlußfittings zu schaffen, die eine besonders einfache Montage erlaubt.

Diese Aufgabe wird erfindungsgemäß mit den Merkmalen des Anspruchs 1 gelöst.

Die erfindungsgemäße Befestigungsvorrichtung besteht aus einer an einer Wand anbringbaren Montageschiene, einer oder mehreren an dieser zu befestigenden Basisplatten und jeweils einem Fittingaufnahmeteil, welches durch eine Zapfen-Loch-Verbindung mit der Basisplatte verbunden ist und an der der Montageschiene abgewandten Vorderseite eine Halterung für den Anschlußfitting aufweist. Durch Anbringen der Basisplatte an der Montageschiene wird zunächst die Position des Anschlußfittings festgelegt, ein Vorsprung der Basisplatte greift dazu in eines der Löcher der Montageschiene ein. So wird die Basisplatte seitlich fixiert und zudem in einem vorbestimmten Rastermaß angebracht. Danach kann das Fittingaufnahmeteil in wählbarer Drehstellung mit der Basisplatte zusammengefügt werden. In der so vorbereiteten Montageeinheit kann dann der Anschlußfitting durch bloßes Einschieben befestigt werden. Zur weiteren Arbeitserleichterung ist es auch möglich, eine vormontierte Basisplatte mit Fittingaufnahmeteil und eventuell auch mit befestigtem Anschlußfitting zu verwenden. Die Basisplatte und das Fittingaufnahmeteil sind bereits unter einem bestimmten Winkel miteinander verschraubt. Diese Einheit braucht dann nur noch auf die an der Wand befestigte Montageschiene aufgebracht zu werden. Ein Verschrauben ist zur Befestigung des Anschlußfittings dann nicht erforderlich.

In bevorzugter Ausführungsform der Erfindung wird die Basisplatte mit zwei Haltearmen auf die Montageschiene aufgerastet. Die Haltearme hintergreifen dabei einen überstehenden Rand der Montageschiene. Ohne diesen Rand müßten Schlitze in die Wand gestemmt werden, um das Hintergreifen mit den Haltearmen zu ermöglichen.

In bevorzugter Form der Erfindung ist die Zapfen-Loch-Verbindung zwischen der Basisplatte und dem Fittingaufnahmeteil in unterschiedlichen Drehwinkeln montierbar und in angebrachtem Zustand drehfest. Dies hat den Vorteil, daß Zuleitungen zu dem Anschlußfitting auch schräg verlegt werden können. Eine drehfeste Verbindung erlaubt ein Einschrauben eines sanitären Elementes in den Anschlußfitting, ohne daß dieser dabei verdreht wird.

Zweckmäßigerweise wird die drehfeste Zapfen-Loch-Verbindung durch ineinandergreifende Verzahnungen von Zapfen und Loch realisiert, wobei der Winkel zwischen zwei Zähnen 22,5° betragen kann. Damit sind übliche Montagewinkel, wie z. B. 45°, 90° und auch Zwischenwinkel, einstellbar.

In einer vorteilhaften Ausführung der Erfindung ist die Halterung des Fittingaufnahmeteils als Tasche realisiert, welche von einer U-förmigen Vorderwand und einer Rückenplatte gebildet wird. In diese Tasche kann der Flansch des Anschlußfittings auf einfache Art eingeschoben werden.

Eine Rastnase, die an der Öffnungsseite der Tasche angebracht ist, kann den Anschlußfitting in der Tasche sichern.

Die Basisplatte und das Fittingaufnahmeteil können jeweils ein Sichtfenster aufweisen, durch welches ein Informationsstreifen, der auf der Montageschiene aufgebracht ist, einsehbar ist. Auf diesem Informationsstreifen befinden sich Positionsangaben.

Im folgenden wird ein Ausführungsbeispiel der Erfindung unter Bezugnahme auf die Zeichnungen näher erläutert.

Es zeigen:

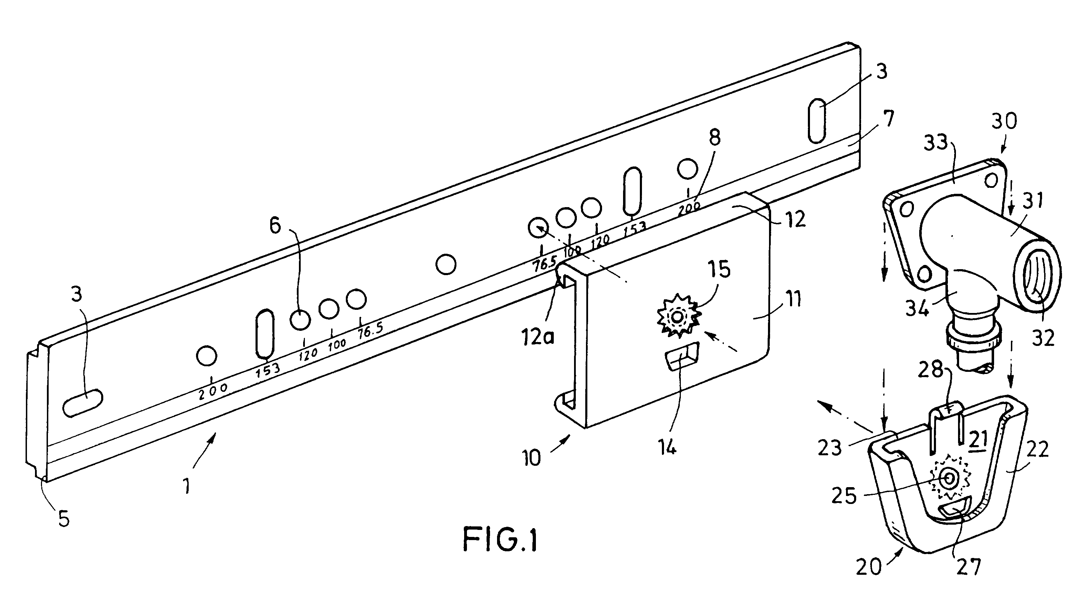

- Fig. 1: eine perspektivische Ansicht einer Befestigungsvorrichtung und eines Anschlußfittings in auseinandergenommenem Zustand,

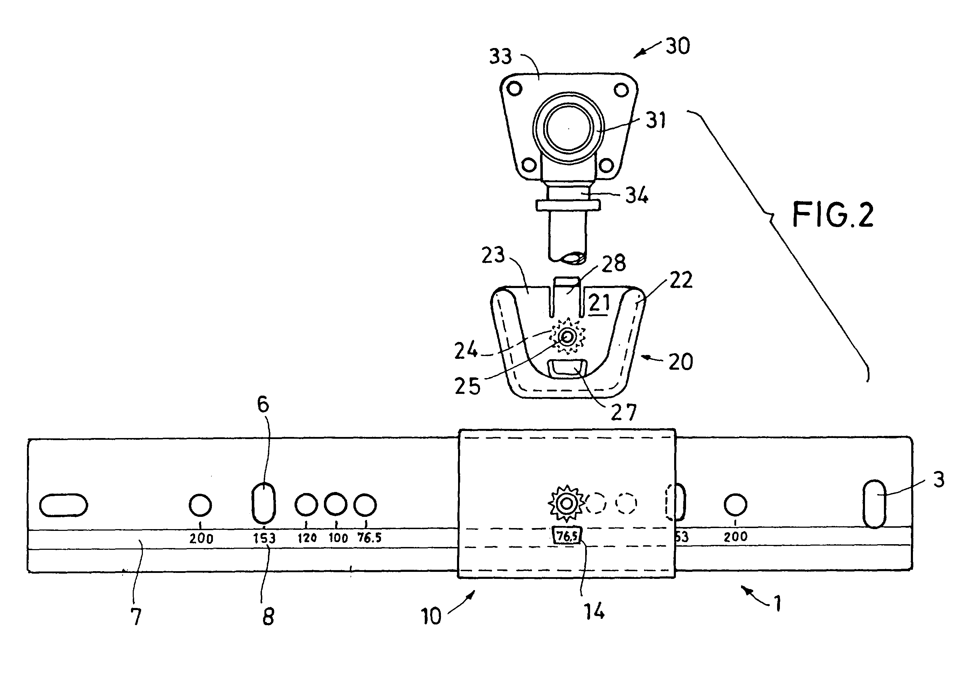

- Fig. 2: eine Vorderansicht der Befestigungsvorrichtung und des Anschlußfittings,

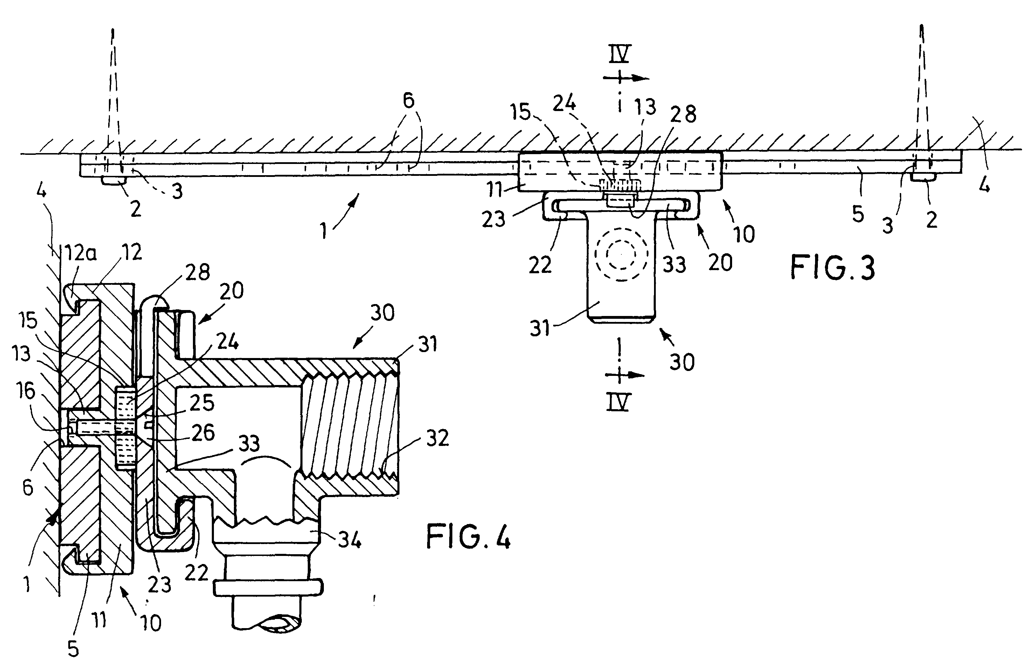

- Fig. 3: eine Draufsicht auf die Befestigungsvorrichtung mit dem Anschlußfitting in montiertem Zustand und
- Fig. 4: einen Schnitt gemäß der Linie IV in Fig. 3.

Eine Montageschiene 1 ist mit Befestigungsschrauben 2, die durch Befestigungslöcher 3 der Montageschiene 1 greifen, an einer Wand 4 befestigt. Die Montageschiene 1 weist an ihren Längskanten einen überstehenden Rand 5 auf und ist an der Vorderseite mit Löchern 6 versehen. Unterhalb der Löcher 6 befindet sich ein Informationsstreifen 7 7 mit Positionsangaben 8, welche, von der Mittelachse der Montageschiene 1 gerechnet, nach links und rechts aufgetragen sind. Jedem Loch 6 ist eine Positionsangabe 8 zugeordnet, so daß für die weitere Montage ein Rastermaß zur Verfügung steht.

Eine U-förmige Basisplatte 10 wird an der Montageschiene 1 befestigt, indem zwei von einem Grundkörper 11 der Basisplatte 10 abstehende Haltearme 12 jeweils einen überstehenden Rand 5 der Montageschiene 1 hintergreifen und dort mit Rastnasen 12a verrasten. Zur seitlichen Fixierung und zur Positionierung in dem Rastermaß greift ein Vorsprung 13, der von dem Grundkörper 11 absteht, in eines der Löcher 6 der Montageschiene ein. Die Basisplatte 10 hat in dem Grundkörper 11 ein Sichtfenster 14, welches so angeordnet ist, daß bei auf die Montageschiene 1 1 aufgesteckter Basisplatte 10 die Positionsangabe 8 des benutzten Loches 6 abzulesen ist. Oberhalb des Sichtfensters 14 und koaxial zu dem Vorsprung 13 befindet sich ein Loch 15. Der Umfang des Loches 15 ist sternförmig mit Zähnen versehen. Das Loch 15 ist ein Sackloch, dessen Tiefe etwa der Hälfte der Stärke des Grundkörpers 11 entspricht. Mittig von dem Boden des Loches 15 ausgehend, erstreckt sich eine Bohrung 16 kleineren Durchmessers durch den Grundkörper 11 und den sich daran anschließenden Vorsprung 13.

An der auf die Montageschiene 1 aufgesteckten Basisplatte 10 wird das Fittingaufnahmeteil 20 befestigt. Diese hat an der Vorderseite eine flache Tasche 21, welche von einer U-förmigen Vorderwand 22 und einer Rückenplatte 23 begrenzt wird. Im Bereich der Öffnung der U-förmigen Vorderwand 22 ist an der Oberkante der Rückenplatte 23 eine Rastnase 28 angebracht. Von der Rückseite der Rückenplatte 23 steht ein Zapfen 24 ab, der sternförmig angeordnete radiale Zähne aufweist und komplementär zu dem gezahnten Loch 15 ausgebildet ist. Der Zapfen 24 ist passend in das Loch 15 der Basisplatte 10 steckbar. Der Winkel zwischen zwei Zähnen beträgt 22,5°. Das Fittingaufnahmeteil 20 kann also unter verschiedenen Drehwinkeln in die Basisplatte 10 eingesteckt werden. Durch den Zapfen 24 verläuft eine zentrale Bohrung 25, die auch die Rückenplatte 23 durchdringt. Ist das Fittingaufnahmeteil 20 an die Basisplatte 10 angesteckt, kann sie mit einem Verbindungselement, das durch die Bohrung 25 gesteckt ist, fixiert werden. Das Verbindungselement kann eine Schraube 26 oder auch ein Hohlniet sein. Die Schraube 26 dringt selbstschneidend in die Bohrung 16 der aus Kunststoff bestehenden Basisplatte 10 ein. Die Rückenplatte 23 hat ebenfalls ein Sichtfenster 27, das genau über dem Sichtfenster 14 der Basisplatte liegt, wenn das Fittingaufnahmeteil 20 mit senkrechter Orientierung an der Basisplatte 10 befestigt ist.

Der an dem Fittingaufnahmeteil 20 zu befestigende Anschlußfitting 30 besteht aus einem Rohrstutzen 31 mit einem Innengewinde 32, einem den Rohrstutzen 31 abschließenden Flansch 33 und einem Zuführstutzen 34, der mit dem Rohrstutzen 31 verbunden ist. Der Anschlußfitting 30 kann in die Tasche 21 des Fittingaufnahmeteils 20 eingeschoben werden und wird dort mit der Rastnase 28 verrastet. Der Flansch 33 ist trapezförmig ausgebildet, wobei die Schmalseite nach unten zeigt. Die Tasche 21 ist an den Flansch 33 angepaßt. Bei der Montage wird der Flansch 33 mit der Schmalseite voran in die Tasche 21 geschoben und die Rastnase 28 greift dann an der breiteren Seite des Flansches 33 an. Die übrigen Seiten des Flansches 33 werden von der Tasche 21 umgeben. An den Zufuhrstutzen 34 kann z. B. ein Wasserrohr angeschlossen werden. Das Wasserrohr ist parallel zu der Wand 4 ausgerichtet und kann entweder lotrecht oder in einem Winkel, der durch die Drehung des Fittingaufnahmeteils 20 bestimmt ist, verlaufen. In das Innengewinde 32 des Rohrstutzens 31 kann z. B. ein Absperrventil eingeschraubt werden. Die Gewindeachse des Absperrventils steht dabei senkrecht zur Wand 4.

Bei der Montage wird zunächst die Montageschiene 1 mit Schrauben 2 an einer Wand 4 festgeschraubt. Die Befestigungslöcher 3 der Wandschiene 1 sind als Langlöcher ausgebildet, so daß die Wandschiene 1 justiert werden kann. Als nächstes wird eine Basisplatte 10 an der Wandschiene 1 befestigt. Die gewünschte Position wird mit Hilfe der Positionsangaben 8 des Informationsstreifens 7 bestimmt. An der gewünschten Position wird die Basisplatte 10 auf die Montageschiene 1 aufgesteckt. Dabei werden die Haltearme 12 mit ihren Rastnasen 12a von den überstehenden Rändern 5 der Montageschiene 1 zunächst auseinandergedrückt. Bei weiterem Vorschub rasten die Rastnasen 12a hinter den vorstehenden Rändern 5 ein. Gleichzeitig greift der Vorsprung 13 der Basisplatte 10 in das Loch 6 der Wandschiene 1 ein. Damit ist die Position des Anschlußfittings 30 festgelegt. Der Drehwinkel des Anschlußfittings 30 ist mit Hilfe des Fittingaufnahmeteils 20 einstellbar. Das Fittingaufnahmeteil 20 wird mit seinem Zapfen 24 in das Loch 15 der Basisplatte 10 eingesteckt. Dies kann in verschiedenen Orientierungen geschehen, so daß der für die Montage gewünschte Winkel des Anschlußfittings 30 eingestellt werden kann. Um die Steckverbindung zu fixieren, wird eine Schraube 26 durch das Loch 25 des Fittingaufnahmeteils 20 gesteckt und in der Bohrung 16 der Basisplatte 10 verschraubt. Die Schraube 26 ist selbstschneidend und schneidet ein Gewinde in die Bohrung 16.

Alternativ ist es möglich, die Basisplatte 10 bereits mit dem Fittingaufnahmeteil 20 vorher zu verschrauben und als vorbereitete Montageeinheit zu verwenden. Denkbar ist, daß der Monteur Montageeinheiten mit verschieden eingestellten üblichen Winkeln des Fittingaufnahmeteils 20 zur Verfügung hat. Nach Befestigung der Montageschiene 1 an der Wand 4 ist dann lediglich das Aufrasten der Basisplatte 10 auf die Montageschiene 1 erforderlich.

Anschließend wird der Anschlußfitting 30 in die Tasche 21 des Fittingaufnahmeteils 20 hineingeschoben. Dabei wird zunächst die Rastnase 28 von der Rückseite des Flansches 33 weggedrückt. Ist der Anschlußfitting 30 vollständig in die Tasche 21 eingeschoben, federt die Rastnase 28 zurück und liegt auf dem oberen Rand des Flansches 33 auf. Dadurch wird der Anschlußfitting 30 in der Tasche 21 gehalten. Nun können die Zuleitungsrohre und die Auslässe an den Anschlußfitting 30 angeschlossen werden.

## Patentansprüche

1. Befestigungsvorrichtung für einen zur Wandmontage von sanitären Elementen verwendeten Anschlußfitting (30), mit einer an einer Wand (4) anbringbaren mit Löchern (6) versehenen Montageschiene (1), einer an der Montageschiene (1) zu befestigenden Basisplatte (10), einem Fittingaufnahmeteil (20) für den Anschlußfitting (30), welches mit einer Zapfen-Loch-Verbindung (15,24) in wählbaren Orientierungen an die Basisplatte (10) ansteckbar ist, wobei von der Basisplatte (10) ein in ein Loch (6) der Montageschiene (1) eingreifender Vorsprung (13) absteht, der axial zu der Zapfen-Loch-Verbindung (15,24) angeordnet ist, und wobei ein Verbindungselement (26) zur Arretierung der Zapfen-Loch-Verbindung (15,24) durch das Fittingaufnahmeteil (20) hindurch in dem Vorsprung (13) der Basisplatte (10) befestigbar ist.

2. Befestigungsvorrichtung nach Anspruch 1, dadurch gekennzeichnet, daß die Montageschiene (1) an ihren Längskanten einen überstehenden Rand (5) aufweist, und daß jeweils ein Haltearm (12) der -Basisplatte (10) einen überstehenden Rand (5) rastend hintergreift und gegen ein unbeabsichtiges Abnehmen der Basisplatte (10) von der Montageschiene (1) an dieser sichert.

3. Befestigungsvorrichtung nach Anspruch 1 oder 2, dadurch gekennzeichnet, daß die Zapfen-Loch-Verbindung (15,24) zwischen der Basisplatte (10) und dem Fittingaufnahmeteil (20) in zusammengefügtem Zustand drehfest ist.

4. Befestigungsvorrichtung nach Anspruch 3, dadurch gekennzeichnet, daß die Zapfen-Loch-Verbindung (15,24) zwischen der Basisplatte (10) und dem Fittingaufnahmeteil (20) in unterschiedlichen Drehwinkeln des Fittingaufnahmeteils (20) zusammenfügbar ist.

5. Befestigungsvorrichtung nach Anspruch 4, dadurch gekennzeichnet, daß die Zapfen-Loch-Verbindung (15,24) einen Zapfen (24) mit polygonaler Außenkontur und ein Loch (15) mit dazu komplementärer Innenstruktur aufweist.

6. Befestigungsvorrichtung nach Anspruch 5, dadurch gekennzeichnet, daß das Drehwinkelrastermaß der Zapfen-Loch-Verbindung (15,24) 22,5° beträgt.

7. Befestigungsvorrichtung nach einem der Ansprüche 1-6, dadurch gekennzeichnet, daß die Halterung an der Vorderseite des Fittingaufnahmeteils (20) als eine von einer U-förmigen Vorderwand (22) und einer Rückenplatte (23) begrenzte Tasche (21) ausgebildet ist.

8. Befestigungsvorrichtung nach Anspruch 7, dadurch gekennzeichnet, daß an der Öffnungsseite der Tasche (21) ein den Flansch (33) des Anschlußfittings (30) haltendes Rastmittel (28) ausgebildet ist.

9. Befestigungsvorrichtung nach einem der Ansprüche 1-8, dadurch gekennzeichnet, daß die Basisplatte (10) ein Sichtfenster (14) aufweist, das bei an der Montageschiene (1) befestigter Basisplatte (10) über einem auf der Montageschiene (1) vorgesehenen Informationsstreifen (7) angeordnet ist.

10. Befestigungsvorrichtung nach Anspruch 9, dadurch gekennzeichnet, daß das Fittingaufnahmeteil (20) ein Sichtfenster (27) aufweist, das in lotrecht befestigtem Zustand des Fittingaufnahmeteils (20) an der Basisplatte (10) auf das Sichtfenster (14) der Basisplatte (10) ausgerichtet ist.

## Claims

1. Mounting device for a connection fitting (30) used for connecting sanitary elements to a wall, comprising a mounting rail (1) adapted to be fixed to a wall (4) and provided with holes (6), a base plate (10) adapted to be fixed to the mounting rail (1), a fitting accommodating part (20) for the connection fitting (30), which fitting accommodating part (20) can be attached in selectable orientations to the base plate (10) using a journal-hole connecting element (15,24), wherein a projection (13) adapted to engage in a hole (6) in the mounting rail (1) extends from the base plate (10), the projection (13) being arranged axially to the journal-hole connecting element (15,24), and wherein a connecting element (26) for locking the journal-hole connecting element (15,24) can be fixed through the fitting accomodating part (20) to the projection (13) of the base plate (10).

2. Mounting device according to claim 1, characterized in that the mounting rail (1) comprises a projecting border (5) at its longitudinal edges and that a respective retaining arm (12) of the base plate (10) lockingly grips behind a projecting border (5) and fastens the base plate (10) to the mounting rail (1) to secure it against unintentional removal from the latter.

3. Mounting device according to claim 1 or 2, characterized in that the journal-hole connecting element (15,24) is secured against rotation

4. Mounting device according to claim 3, characterized in that the journal-hole connecting element (15,24) between the base plate (10) and the fitting accommodating part (20) can be assembled at different angles of rotation of the fitting accommodating part (20).

5. Mounting device according to claim 4, characterized in that the journal-hole connecting element (15,24) comprises a journal (24) with polygonal outer contour and a hole (15) with complementary inner structure.

6. Mounting device according to claim 5, characterized in that the rotation angle grid measure of the journal-hole connecting element (15, 24) is 22.5°.

7. Mounting device according to one of claims 1-6, characterized in that the holding fixture on the front side of the fitting accommodating part (20) is configured as a pocket (21) defined by a U-shaped front wall (22) and a rear plate (23).

8. Mounting device according to claim 7, characterized in that a locking means (28) retaining the flange (33) of the connection fitting (30) is provided at the opening side of the pocket (21).

9. Mounting device according to one of claims 1-8, characterized in that the base plate (10) comprises a window (14) which is arranged above an information strip (7) provided on the mounting rail (1) when the base plate (10) is fixed to the mounting rail (1).

10. Mounting device according to claim 9, characterized in that the fitting accommodating part (20) comprises a window (27) which is oriented towards the window (14) of the base plate (10) when the fitting accommodating part (20) is vertically fixed to the base plate (10).

## Revendications

1. Dispositif de fixation pour une pièce de robinetterie de raccordement (30), utilisé pour le montage en paroi d'éléments sanitaires, avec une glissière de montage (1), susceptible d'être montée sur une paroi ou mur (4) et dotée de trous (6), une plaque de base (10) à fixer sur la glissière de montage (1), une partie de logement de pièce de robinetterie de raccordement (20) pour la pièce de robinetterie de raccordement (30), susceptible d'être enfichée sur la plaque de base (10) dans une liaison à téton et alésage (15, 24), selon des orientations sélectionnables, une saillie (13), s'engageant dans un trou (6) de la glissière de montage (1), se projetant depuis la plaque de base (10), saillie disposée axialement par rapport à la liaison à téton et alésage (15, 24), et un élément de liaison (26), destiné à bloquer la liaison à téton et alésage (15, 24), étant susceptible d'être fixé dans la saillie (13) de la plaque de base (10), en traversant la partie de logement de pièce de robinetterie (20).

2. Dispositif de fixation selon la revendication 1, caractérisé en ce que la glissière de montage (1) présente sur ses arêtes longitudinales un bord (5) en saillie, et en ce qu'un bras de maintien (12) de la plaque de base (10) saisit chaque fois par l'arrière, avec encliquetage, un bord (5) en saillie, et empêche tout enlèvement intempestif de la plaque de base (10) montée sur la glissière de montage (1), vis à vis de celle-ci.

3. Dispositif de fixation selon la revendication 1 ou 2, caractérisé en ce que la liaison à téton et alésage (15, 24), entre la plaque de base (10) et la partie de logement de pièce de robinetterie (20), est bloquée en rotation lorsqu'elle est à l'état assemblé.

4. Dispositif de fixation selon la revendication 3, caractérisé en ce que la liaison à téton et alésage (15, 24), entre la plaque de base (10) et la partie de logement de pièce de robinetterie (20), est susceptible d'être assemblée sous différents angles de rotation de la partie de logement de pièce de robinetterie (20).

5. Dispositif de fixation selon la revendication 4, caractérisé en ce que la liaison à téton et alésage (15, 24) présente un téton (24) de contour extérieur polygonal et un alésage (15) présentant une structure intérieure lui étant complémentaire.

6. Dispositif de fixation selon la revendication 5, caractérisé en ce que l'étagement angulaire en rotation de la liaison à téton et alésage (15, 24) est de 22,5 degrés.

7. Dispositif de fixation selon l'une des revendications 1-6, caractérisé en ce que la fixation sur la face avant de la partie de logement de pièce de robinetterie (20) est réalisée sous la forme d'une poche (21) délimitée par une paroi avant (22) en forme de U et une plaque arrière (23).

8. Dispositif de fixation selon la revendication 7, caractérisé en ce que sur le côté ouverture de la poche (21) est réalisé un moyen d'encliquetage (28) maintenant la bride (33) de la pièce de robinetterie de raccordement (30).

9. Dispositif de fixation selon l'une des revendications 1-8, caractérisé en ce que la plaque de base (10) présente une fenêtre d'observation (14), qui, lorsque la plaque de base (10) est fixée sur la glissière de montage (1), est disposée au-dessus d'une bande d'information (7) prévue sur la glissière de montage (1).

10. Dispositif de fixation selon la revendication 9, caractérisé en ce que la partie de logement de pièce de robinetterie (20) présente une fenêtre d'observation (27), qui, lorsque la partie de logement de pièce de robinetterie (20) est fixée verticalement à la plaque de base (10) est alignée sur la fenêtre d'observation (14) de la plaque de base (10).
